# FASCICULE DE BREVET EUROPEEN

(11) **EP 2 222 946 B1**
(45) Date de publication et mention de la délivrance du brevet: **07.12.2016**
(21) Numéro de dépôt: 08863982.8
(22) Date de dépôt: 17.12.2008
(51) Int. Cl.: F02D 41/24, F02N 11/04, F02N 11/08, F02N 11/10

(54) **PROCEDE ET DISPOSITIF DE CONTROLE SECURISE D'UN SYSTEME A ALTERNO-DEMARREUR COUPLE A UN MOTEUR THERMIQUE D'UN VEHICULE, ET SYSTEME A ALTERNO-DEMARREUR ET LIAISONS FILAIRES CORRESPONDANT**
VERFAHREN UND VORRICHTUNG ZUR SICHEREN STEUERUNG EINER AN DIE WÄRMEKRAFTMASCHINE EINES FAHRZEUGES GEKOPPELTEN GENERATOR-STARTER-ANORDNUNG, ENTSPRECHENDE GENERATOR-STARTER-ANORDNUNG UND DRAHTVERBINDUNGEN
METHOD AND DEVICE FOR THE SECURED CONTROL OF AN ALTERNATOR-STARTER ASSEMBLY COUPLED TO THE THERMAL ENGINE OF A VEHICLE, AND CORRESPONDING ALTERNATOR-STARTER ASSEMBLY AND WIRE LINKS

(30) Priorité: 21.12.2007 FR 0760206; 21.12.2007 FR 0760261
(43) Date de publication de la demande: 01.09.2010
(73) Titulaire: Valeo Equipements Electriques Moteur, 94046 Créteil Cedex (FR)
(72) Inventeur: RANIER, Marc, F-94290 Villeneuve Le Roi (FR); LECOLE,Brice, F-PARIS 75012 (FR); GUBIAN, Régis, F-75012 Paris (FR)
(74) Mandataire: Tran, Chi-Hai
(86) Numéro de dépôt international: PCT/FR2008/052349
(87) Numéro de publication internationale: WO 2009/081045

(56) Documents cités:
- EP-A- 0 793 013
- FR-A- 2 855 677
- FR-A- 2 875 549
- FR-A- 2 875 551
- FR-A- 2 875 557
- FR-A- 2 881 295

## Description

### DOMAINE TECHNIQUE DE L'INVENTION.

La présente invention concerne un procédé et un dispositif de contrôle sécurisé d'un système à alterno-démarreur couplé à un moteur thermique d'un véhicule.

L'invention concerne aussi un système à alterno-démarreur apte à la mise en oeuvre du procédé et comprenant ce dispositif.

### ARRIERE PLAN TECHNOLOGIQUE DE L'INVENTION.

Des considérations d'économie d'énergie et de réduction de la pollution, surtout en milieu urbain, conduisent les constructeurs de véhicules automobiles à équiper leurs modèles d'un système d'arrêt/ relance automatique du moteur thermique (dit « système d'arrêt/relance moteur automatique » dans la suite de la description), tel que le système connu sous le terme anglo-saxon de « Stop and Go ».

Ainsi que le rappelle la société VALEO EQUIPEMENTS ELECTRIQUES MOTEUR dans la demande de brevet FR2875549, les véhicules sont rendus aptes à fonctionner selon le mode « Stop and Go » grâce à une machine électrique réversible, ou alterno-démarreur, couplée au moteur thermique, alimentée par un onduleur en mode « démarreur ».

L'utilisation d'un système à alterno-démarreur dans un mode de fonctionnement « Stop and Go » consiste, sous certaines conditions, à provoquer l'arrêt complet du moteur thermique lorsque le véhicule est lui-même à l'arrêt, puis à relancer le moteur thermique à la suite, par exemple, d'une action du conducteur interprétée comme une demande de relance du moteur thermique.

Une situation typique de « Stop and Go » est celle de l'arrêt à un feu rouge. Lorsque le véhicule s'arrête au feu, le moteur thermique est automatiquement stoppé, puis, quand le feu devient vert, le moteur est relancé au moyen du système à alterno-démarreur, comme suite à la détection par le système de l'enfoncement de la pédale d'embrayage par le conducteur, ou de toute autre action traduisant la volonté du conducteur de provoquer un déplacement de son véhicule.

Pour ce faire, ainsi que l'indique également la société VALEO EQUIPEMENTS ELECTRIQUES MOTEUR dans la demande de brevet FR2875551, le système « Stop and Go » utilise des informations représentatives de l'état de fonctionnement du véhicule, informations provenant de capteurs du véhicule, tels que les capteurs de température de l'habitacle ou de détection de la position de la pédale d'embrayage, ou les informations lues sur un bus de communication de données, comme la vitesse du véhicule ou la vitesse de rotation du moteur.

Il va de soi que la fonction de relance automatique réalisée par un système à alterno-démarreur est une fonction qui doit assurer un certain niveau de sûreté de fonctionnement.

La société VALEO EQUIPEMENTS ELECTRIQUES MOTEUR dans la demande de brevet FR2881295 divulgue un procédé pour faire fonctionner un système à alterno-démarreur dans un véhicule automobile. Une gestion de haut niveau et une gestion de bas niveau de la machine alterno-démarreur sont réalisées par une unité de contrôle distante qui échange des informations matérielles, via une pluralité de liaisons, avec un module de puissance intégré dans ou à proximité immédiate de la machine.

Par ailleurs, comme l'expose la société VALEO EQUIPEMENTS ELECTRIQUES MOTEUR dans la demande de brevet FR2875557, la caractéristique essentielle d'un procédé de commande d'un système à alterno-démarreur en mode démarreur est de comporter des étapes de vérification de conditions dites préalables à la relance moteur avant la phase de relance, et des conditions dites « sécuritaires » pendant toute la phase de relance moteur.

Une condition préalable à la relance du moteur est notamment déterminée par au moins une action intentionnelle du conducteur, par exemple, l'enfoncement de plus de 90% de la pédale d'embrayage.

Une condition supplémentaire est, par exemple, que le réseau de bord du véhicule soit alimenté, c'est-à-dire que la clé de contact du véhicule soit en position +APC « après contact », et que la chaîne de traction soit ouverte.

En effet, il n'est pas question, alors que l'on se trouve à l'arrêt (c'est-à-dire à vitesse nulle) et le moteur thermique arrêté par la fonction automatique, de relancer celui-ci sans que l'on soit certain que la chaîne de traction soit ouverte.

Si elle était fermée, la relance du moteur pourrait entraîner le véhicule et par suite le faire avancer (ou reculer), mettant ainsi en danger la sécurité de biens ou de personnes.

Ainsi, afin d'éviter ce type de situation, on met aujourd'hui en oeuvre une solution qui utilise une ligne spécifique de contrôle Auth. Ond. pour autoriser la commande de l'onduleur. Cette ligne spécifique de contrôle Auth. Ond. provient d'un système de commande du véhicule, externe à la fonction arrêt/relance automatique, ce qui résout la plupart des contraintes de sécurité.

En complément, on introduit, afin de diagnostiquer l'état activé de la machine électrique, une sécurité supplémentaire. Cette sécurité est réalisée par la ligne Diag1. Ond. qui convoie une information indiquant la rotation de la machine électrique, information obtenue à partir de signaux de capteurs de position du rotor.

Cette information est ensuite mise en forme par le microprocesseur de pilotage de la machine électrique, et est transmise au microprocesseur de l'unité de contrôle électronique du véhicule parmi les signaux d'état et défauts.

Cette solution résout la plupart des contraintes de sécurité inhérentes à la fonction mais révèle certains inconvénients.

En effet, l'information Diag1. Ond. n'est rendue disponible pour l'unité de contrôle électronique du véhicule que lorsque le microprocesseur de pilotage de la machine électrique est fonctionnel. Ceci implique un certain délai logiciel pour être réactif lorsque l'information n'est pas présente (délai pour détecter l'absence d'information).

Un autre inconvénient est que cette solution nécessite la mise en oeuvre d'un microprocesseur ayant une capacité de traitement importante, car le microprocesseur de pilotage de la machine électrique doit à la fois commander celle-ci, en assurer la surveillance, et supporter tout ou partie de la stratégie système, tout en réalisant l'interface vers l'extérieur.

Cette solution n'est pas non plus adaptée au cas où la machine électrique est utilisée à la fois pour la relance du moteur thermique et pour l'assistance en couple.

Une simple ligne de contrôle (Auth. Ond) ne peut être utilisée pour empêcher aussi bien des relances que des opérations d'assistance en couple. En effet, la fonction de relance ne peut être activée que si la chaîne de traction est ouverte, alors que la fonction d'assistance en couple ne peut être activée que lorsque la chaîne de traction est fermée. Ces deux conditions se révèlent contradictoires.

Il existe par conséquent un besoin pour une nouvelle architecture qui permette de s'affranchir de l'ensemble de ces problématiques en augmentant le niveau de sécurité de la fonctionnalité globale.

### DESCRIPTION GENERALE DE L'INVENTION.

La présente invention vise à satisfaire ce besoin et a précisément pour objet un procédé de contrôle sécurisé d'un système à alterno-démarreur couplé à un moteur thermique d'un véhicule.

Le véhicule dont il s'agit est connu en soi, et comporte au moins une unité de contrôle électronique, des capteurs véhicule, un bus de communication de données et un réseau électrique de bord.

Le système à alterno-démarreur comporte classiquement au moins une machine électrique tournante munie d'un moyen de détection de rotation, des circuits de puissance comportant au moins un onduleur et un circuit d'excitation alimentant la machine électrique tournante, et un circuit de commande des circuits de puissance.

De manière connue, le procédé de contrôle sécurisé de ce système à alterno-démarreur est du type consistant à:
- générer au moyen de l'unité de contrôle électronique des signaux de contrôle du système à alterno-démarreur à partir de premiers signaux d'information Capt. Véh., représentatifs d'un état de fonctionnement du véhicule, provenant des capteurs véhicule;
- générer au moyen de ce circuit de commande des signaux de commande des circuits de puissance à partir de signaux de diagnostic représentatifs d'un état de fonctionnement du système à alterno-démarreur ;

Le procédé de contrôle sécurisé de ce système à alterno-démarreur, selon l'invention, est remarquable en ce qu'il consiste en outre à:
- générer les signaux de contrôle au moyen de l'unité de contrôle électronique à partir de plus d'au moins un premier signal de diagnostic Diag1. Ond. parmi les signaux de diagnostic représentatifs d'un état de fonctionnement du système à alterno-démarreur ;
- générer les signaux de commande au moyen du circuit de commande à partir de plus de seconds signaux d'information provenant du bus de communication de données.

De préférence, au moins un premier signal de commande Cd. Exc. parmi les signaux de commande constitue au moins un deuxième signal de diagnostic Diag1. Exc. parmi les signaux de diagnostic représentatifs d'un état de fonctionnement du système à alterno-démarreur.

Fort avantageusement, le procédé de contrôle sécurisé d'un système à alterno-démarreur, selon l'invention, consiste en outre à :
- générer au moins un premier signal de contrôle, Dd. Ond. et/ou Dd. Exc., parmi les signaux de contrôle au moyen d'un premier microprocesseur agencé dans l'unité de contrôle électronique et traitant au moins les premier et deuxième signaux de diagnostic Diag. Ond., Diag1. Exc.;
- générer au moins un second signal de contrôle Auth. Ond. parmi les signaux de contrôle au moyen d'un premier circuit de décision en logique câblée agencé dans l'unité de contrôle;
- générer les signaux de commande Cd. Ond. et Cd. Exc. au moyen exclusivement d'un second circuit de décision en logique câblée agencé dans le circuit de commande.

On tire bénéfice du fait que ce procédé de contrôle sécurisé d'un système à alterno-démarreur consiste aussi à :
- générer au moins le second signal de contrôle Auth. Exc. en fonction d'au moins un premier signal d'activation Act. Exc. parmi des signaux d'activation et/ou d'inhibition générés par le premier microprocesseur et d'un signal de contact représentatif de la mise sous tension du réseau électrique de bord ;
- générer au moins le premier signal de commande Cd. Exc. en fonction du second signal de contrôle Auth. Exc., et d'au moins un premier signal de pilotage Pil. Exc. parmi des signaux de pilotage générés par un second microprocesseur agencé dans le circuit de commande.

Des signaux d'état/défaut sont de plus avantageusement transmis au moyen du second microprocesseur vers le premier microprocesseur.

Dans le procédé de contrôle sécurisé selon l'invention, le circuit d'excitation est commandé par le premier signal de commande Cd. Exc. qui est issu, pour des raisons de fiabilité, du second circuit de logique câblée, et où il a été validé par le second signal de contrôle Auth. Exc..

Le premier signal de diagnostic Diag1. Ond. est de préférence fourni par le moyen de détection de rotation.

L'invention concerne également un dispositif de contrôle sécurisé d'un système à alterno-démarreur couplé à un moteur thermique d'un véhicule adapté à la mise en oeuvre du procédé décrit ci-dessus.

Ce dispositif est du type de ceux où:
- l'unité de contrôle électronique du véhicule reçoit des premiers signaux d'information représentatifs d'un état de fonctionnement de ce véhicule provenant des capteurs véhicule et génère des signaux de contrôle du système à alterno-démarreur ;
- le circuit de commande des circuits de puissance, c'est-à-dire au moins un onduleur et un circuit d'excitation, reçoit des signaux de diagnostic représentatifs d'un état de fonctionnement du système à alterno-démarreur et génère des signaux de commande des circuits de puissance.

Le dispositif de contrôle sécurisé selon l'invention est remarquable en ce que :
- l'unité de contrôle électronique du véhicule reçoit de plus au moins un premier signal de diagnostic Diag1. Ond. parmi les signaux de diagnostic ;
- le circuit de commande reçoit de plus des seconds signaux d'information du bus de communication de données.

Dans ce dispositif, on tire bénéfice du fait qu'au moins un premier signal de commande Cd. Exc., parmi les signaux de commande des circuits de puissance, constitue au moins un deuxième signal de diagnostic Diag1. Exc. parmi les signaux de diagnostic.

Fort avantageusement, le dispositif selon l'invention comprend en outre :
- un premier microprocesseur agencé dans l'unité de contrôle électronique du véhicule traitant au moins le premier signal de diagnostic Diag1. Exc. et le second signal de diagnostic Diag1. Exc., et générant au moins un premier signal de contrôle, Dd. Ond. et/ou Dd. Exc., parmi les signaux de contrôle du système à alterno-démarreur ;
- un premier circuit de décision en logique câblée agencé dans l'unité de contrôle du véhicule et générant au moins un second signal de contrôle Auth. Exc. parmi les signaux de contrôle;
- un second circuit de décision en logique câblée agencé dans le circuit de commande et générant les signaux de commande Cd. Ond. et Cd. Exc. des circuits de puissance.

Le dispositif selon l'invention comprend de plus de
- une première porte logique produisant le second signal de contrôle Auth. Exc., ou plusieurs, en fonction d'au moins un premier signal d'activation Act. Exc. parmi des signaux d'activation Act. Exc et/ou d'inhibition Inh. Ond. générés par le premier microprocesseur, et d'un signal de contact +APC/ Vbat représentatif de la mise sous tension du réseau électrique de bord ;
- un second microprocesseur agencé dans le circuit de commande des circuits de puissance et générant des signaux de pilotage Pil. Ond. et Pil. Exc. ;
- une deuxième porte logique générant le premier signal de commande Cd. Exc., ou plusieurs, en fonction du second signal de contrôle Auth. Exc., et d'au moins un premier signal de pilotage Pil. Exc. parmi les signaux de pilotage Pil. Ond. et Pil. Exc.

De préférence le second microprocesseur transmet des signaux d'état/défaut vers le premier microprocesseur, et avantageusement, il s'agit du premier signal de commande Cd. Exc. qui commande le circuit d'excitation.

Le premier signal de diagnostic Diag1. Ond. est de préférence fourni par le moyen de détection de rotation.

L'invention vise aussi un système à alterno-démarreur destiné à un moteur thermique d'un véhicule comprenant le dispositif de contrôle sécurisé décrit précédemment, et, notamment, un système à alterno-démarreur comprenant une fonction de freinage récupératif, de type micro-hybride.

Ces quelques spécifications essentielles auront rendu évidents pour l'homme de métier les avantages apportés par l'invention par rapport à l'état de la technique antérieur.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

### BREVE DESCRIPTION DES DESSINS.

La Figure 1 est une représentation schématique d'un système à alterno-démarreur connu couplé à un moteur thermique de véhicule.
La Figure 2 est une représentation schématique d'un système micro-hybride à freinage récupératif et/ou assistance en couple à alterno-démarreur, système connu et couplé à un moteur thermique de véhicule.
La Figure 3 est un schéma de principe d'un dispositif de contrôle sécurisé connu pour le cas d'un système à alterno-démarreur du type de celui représenté sur la Figure 1.
La Figure 4 représente un schéma de principe montrant des liaisons filaires et un dispositif de contrôle sécurisé selon l'invention pour le cas d'un système d'arrêt/relance automatique à alterno-démarreur du type de celui représenté sur la Figure 1.
La Figure 5 est un schéma de principe montrant des liaisons filaires et un dispositif de contrôle sécurisé selon l'invention pour le cas d'un système micro-hybride à freinage récupératif et/ou assistance en couple du type de celui représenté sur la Figure 2.
La Figure 6a est un schéma de principe montrant les liaisons filaires, selon l'invention, d'un premier mode de réalisation préféré du dispositif de contrôle sécurisé d'un système micro-hybride à freinage récupératif et/ou assistance en couple du type de celui montré sur la Figure 2, dans une variante de réalisation.
La Figure 6b est un schéma de principe montrant les liaisons filaires, selon l'invention, d'un deuxième mode de réalisation préféré du dispositif de contrôle sécurisé d'un système micro-hybride à freinage récupératif et/ou assistance en couple du type de celui montré sur la Figure 2, dans une variante de réalisation.
La Figure 7 est un diagramme montrant la transmission des signaux dédiés relatifs au procédé de contrôle sécurisé d'un système micro-hybride à freinage récupératif et/ou assistance en couple, selon l'invention.

### DESCRIPTION DES MODES DE REALISATION PREFERES DE L'INVENTION.

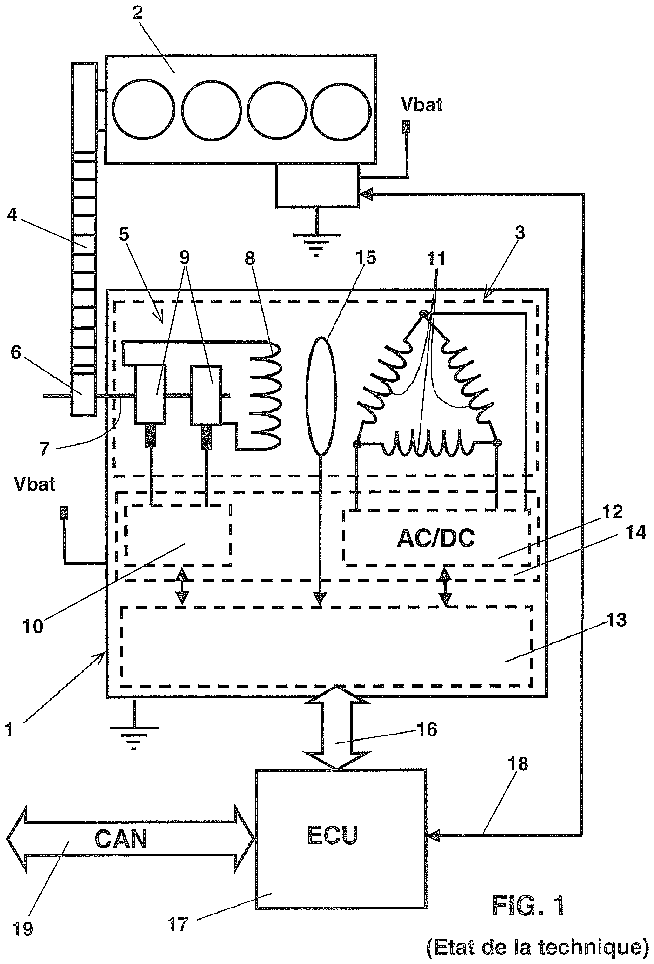

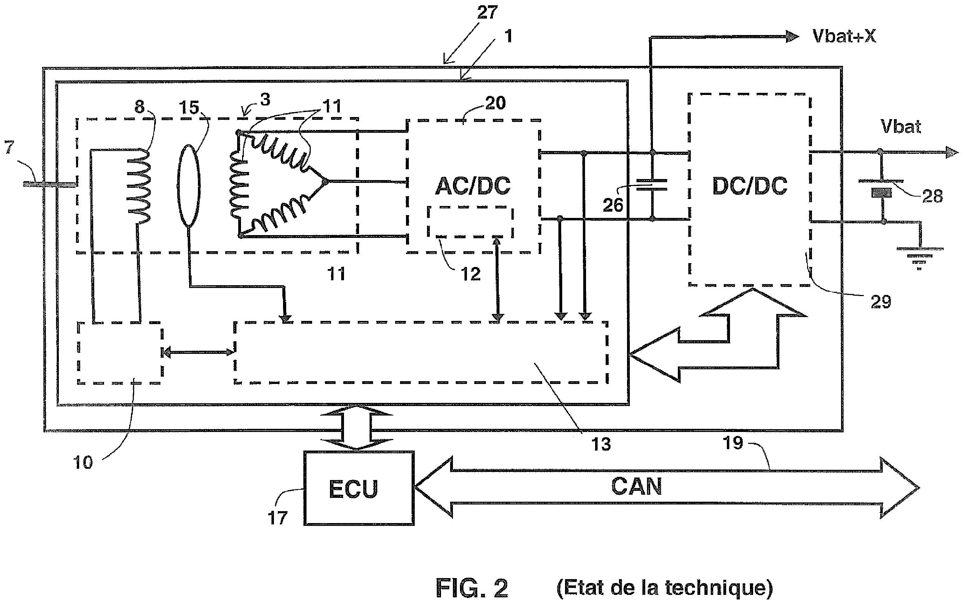

Les modes de réalisation préférés de l'invention concernent les véhicules équipés d'un système à alterno-démarreur avec ou sans dispositif de récupération d'énergie au freinage, tels que représentés schématiquement sur les Figures 1 et 2, respectivement.

La Figure 1 montre un système à alterno-démarreur 1 couplé à un moteur thermique 2 de véhicule.

Ce système à alterno-démarreur 1 comprend une machine électrique réversible 3 accouplée au moteur 2 au moyen d'une transmission 4 par courroie et poulies.

La machine électrique 3 comporte un rotor 5 solidaire d'une poulie de sortie 6 en bout d'arbre 7. Le rotor 5 présente un inducteur 8 alimenté au moyen d'un collecteur tournant 9 par un circuit d'excitation 10.

La machine 3 comprend également des enroulements de phases 11, ou induit, alimentés par un onduleur 12.

Un circuit de commande 13 pilote les circuits de puissance 14 de la machine 3, constitués par l'onduleur 12 et le circuit d'excitation 10, en fonction des informations fournies par un capteur de la position 15 du rotor 5, et de signaux de contrôle 16 générés par une unité de contrôle électronique 17, 17a du véhicule.

L'unité de contrôle électronique 17, 17a reçoit des paramètres de fonctionnement du moteur 2, et d'autres informations de contexte par des liaisons filaires dédiées 18 ou par le bus de communication de données 19 embarqué de type CAN.

L'onduleur 12 est de préférence constitué par un circuit hacheur 20 de la tension d'alimentation Vbat de bord générant des impulsions, dont la fréquence et la largeur sont contrôlées par le circuit de commande 13.

Le circuit hacheur 20 est un convertisseur alternatif - continu réversible qui fonctionne en redresseur synchrone 21 quand le système à alterno-démarreur 1 fonctionne en alternateur.

Comme il a été déjà expliqué, la fonction de redémarrage automatique réalisée par un système à alterno-demarreur 1 est une fonction qui doit assurer un certain niveau de sûreté de fonctionnement.

En effet, il n'est pas question, par exemple, alors que l'on se trouve à l'arrêt (c'est-à-dire à vitesse nulle) et le moteur 2 arrêté par la fonction, de redémarrer celui-ci sans que l'on soit certain que la chaîne de traction soit ouverte.

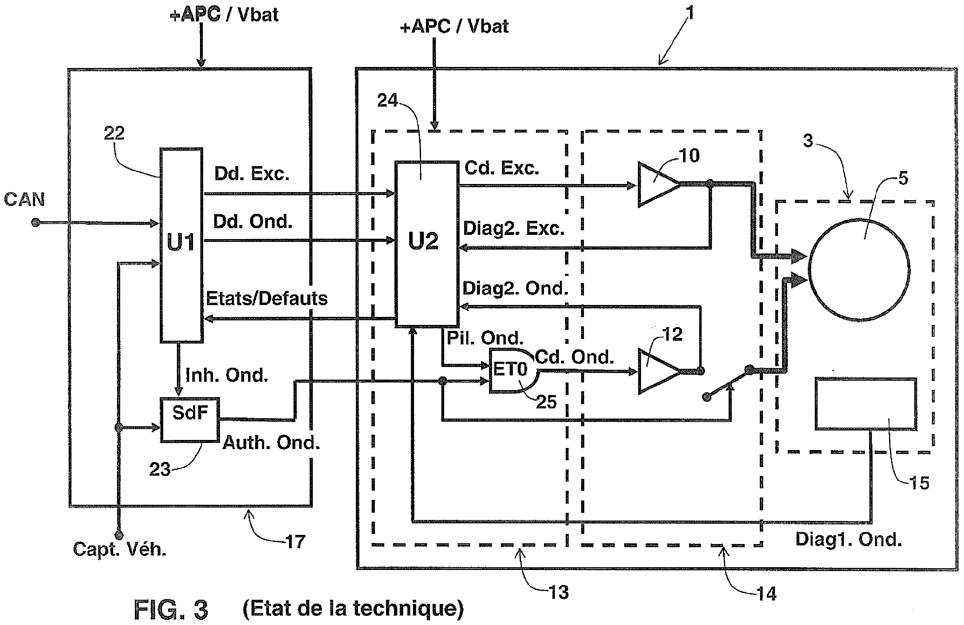

La solution connue, qui a déjà été mise en oeuvre afin d'éviter ce type de situation, est représentée sur la Figure 3.

La Figure 3 montre de façon plus détaillée le circuit de commande 13 et l'unité de contrôle électronique 17, 17a de la Figure 1.

L'unité de contrôle électronique 17, 17a du véhicule, alimentée par la tension de batterie Vbat ou un après contact +APC, comprend un premier microprocesseur 22, et un premier circuit de décision 23 en logique câblée, qui reçoivent des premiers signaux d'information Capt. Véh. en provenance des capteurs du véhicule, et génèrent les signaux de contrôle Dd. Exc., Dd. Ond., Auth. Ond. du circuit de commande 13, c'est-à-dire une demande de fermeture du circuit d'excitation Dd. Exc., une demande d'entrée en fonction de l'onduleur Dd. Ond.,et une autorisation de l'entrée en fonction de l'onduleur Auth. Ond..

Le circuit de commande 13, alimenté également par la tension de batterie Vbat ou un après contact +APC, comprend un second microprocesseur 24, et une porte ET 25, qui reçoivent les signaux de contrôle Dd. Exc., Dd. Ond., Auth. Ond. de l'unité de contrôle électronique 17, 17a, et génèrent les signaux de commande de fermeture du circuit d'excitation Cd. Exc. et de mise en fonction de l'onduleur Cd. Ond. qui commandent respectivement le circuit d'excitation 10 et l'onduleur 12 des circuits de puissance 14.

Le second microprocesseur 24 reçoit de plus des signaux de diagnostic Diag2. Exc., Diag2. Ond. sur l'état de la fermeture du circuit d'excitation 10, et la mise en fonction de l'onduleur 12, respectivement.

En même temps, le second microprocesseur 24 diagnostique la vitesse de la machine électrique tournante 3 au moyen d'une ligne dédiée Diag1. Ond. reliée au capteur de position 15 de la machine 3.

Les états et défauts de fonctionnement du système à alterno-démarreur 1 sont signalés au premier microprocesseur 22 de l'unité de contrôle électronique 17, 17a par la transmission de signaux d'état/ défaut (Etats/Défauts) en provenance du circuit de commande 13.

On utilise une ligne d'inhibition dédiée Inh. Ond. provenant du premier microprocesseur 22, qui valide ou non l'autorisation Auth. Ond. de l'entrée en fonctionnement de l'onduleur 12 générée par le premier circuit de décision 23 en logique câblée, afin de résoudre la majeure partie des contraintes de sûreté de fonctionnement SdF liées à la fonction redémarrage, et rappelées ci-dessus.

Le signal d'autorisation Auth. Ond. d'entrée en fonctionnement de l'onduleur 12 appliqué sur une entrée de la porte ET 25 du circuit de commande 13 dont la sortie Cd. Ond. commande l'onduleur 12, valide le signal de pilotage de l'onduleur Pil. Ond. généré par le second microprocesseur 24, et appliqué sur l'autre entrée.

Le fait que le contrôle de la mise en fonction de l'onduleur 12 soit assuré par le premier microprocesseur 22 extérieur à la fonction, et par des circuits de décision en logique câblée, contribue au renforcement de la sécurité.

Mais le dispositif de contrôle sécurisé d'un système à alterno-démarreur 1 représenté sur la Figure 3 révèle quelques faiblesses, qui sont :
- premièrement, le diagnostic Diag1. Ond. de l'activation du mode moteur du convertisseur alternatif/ continu réversible 20 n'est émis qu'à destination du second microcontrôleur 24 du circuit de commande 13 de l'onduleur 12. De ce fait, l'information n'est rendue disponible pour l'unité de contrôle électronique du véhicule 17, 17a que lorsque le second microprocesseur 24 est fonctionnel. Ceci implique un certain délai logiciel pour être réactif lorsque l'information n'est pas disponible (temps de détecter l'absence d'information).
- deuxièmement, l'onduleur 12 est activé à partir d'un organe externe au système, et contraint dans le cas d'une architecture de type micro-hybride ou dite de type «14+X », telle que représentée schématiquement sur la Figure 2, (c'est-à-dire, où l'on dispose d'un stockeur d'énergie 26 intermédiaire et de capacité à réaliser une fonction d'assistance en couple du moteur) soit
   - de modifier l'architecture véhicule et/ou des organes extérieurs à la fourniture dans le cas où la fonction est présente ;
   - soit d'utiliser une autre architecture qui ne révèle pas ce problème lorsque l'on souhaite une fonction autonome, c'est à dire une fonction qui impactera le moins possible (voire pas du tout) de composant externe à la fourniture. C'est cette dernière solution qui est exposée ci-dessous en liaison avec les

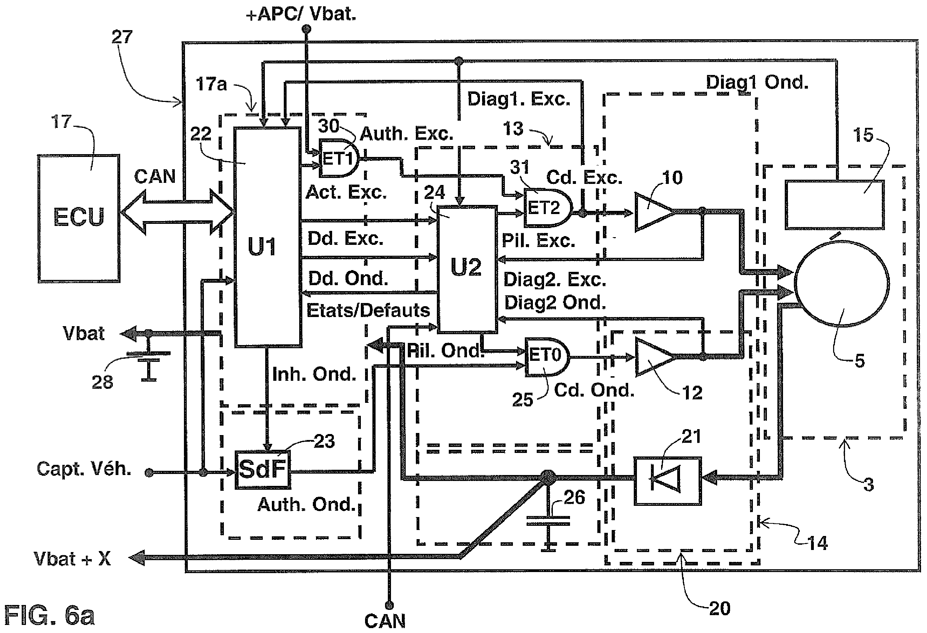

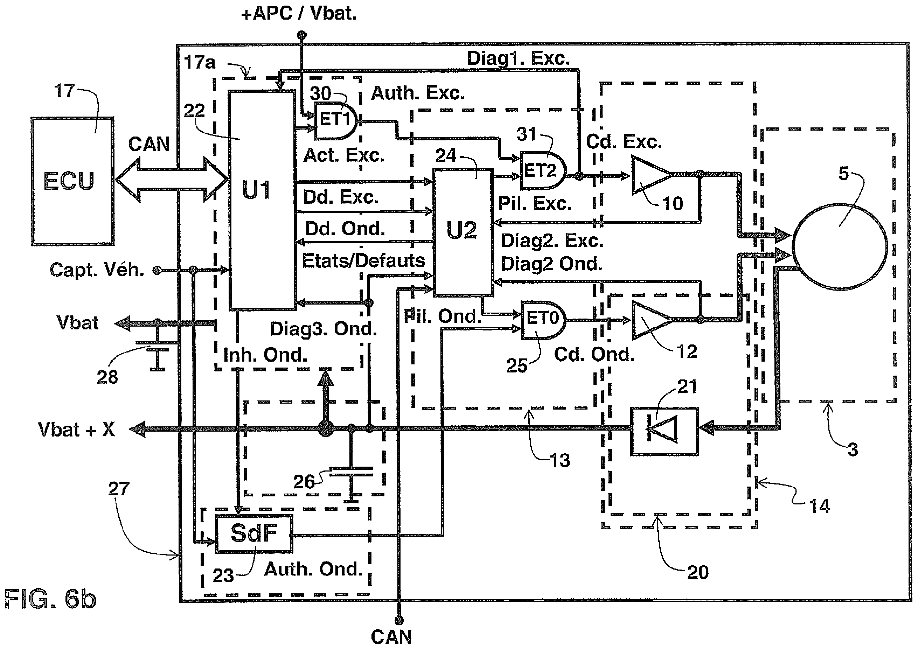

Figure 6a et 6b et dont le principe consiste à utiliser deux circuits de commande 17a, 13 mis en oeuvre au sein du système 27 ; ces circuits contenant pour chacune un microprocesseur 22, 24 sont agencées de façon à ce qu'ils se surveillent mutuellement (par exemple, le second circuit de commande 13 surveille le premier circuit de commande 17a afin d'inhiber ses demandes dans le cas où l'on a détecté que son microprocesseur 22 était défaillant, ou qu'il déclenche une action intempestive, c'est à dire non désirée), ce qui permet la sécurisation de l'activation du mode moteur (Assistance en couple ou démarrage/ redémarrage) en évitant la mise en oeuvre de solutions de sécurisation plus coûteuses au sein, par exemple de l'électronique de commande de la machine électrique tournante 3.
- troisièmement, dans le cas d'un système micro-hybride dit de type «14+X », alors que de nombreuses ressources du second microprocesseur 24 sont utilisées pour la surveillance et la commande de la machine électrique 3, le second microprocesseur 24, dans le cas du système à alterno-démarreur 1 représenté sur la Figure 1, est en même temps l'organe d'interface avec l'extérieur du système, ce qui requiert une capacité de traitement très importante (pour réaliser à la fois l'interface vers l'extérieur et la commande machine). De plus, il doit également supporter tout ou partie de la stratégie système.
- quatrièmement, certaines solutions de sécurisation ne sont pas réalisables dans le cas d'une architecture de type «14+X ».

Une architecture de type «14+X », ou de type micro-hybride, est représentée sur la Figure 2.

Le système micro-hybride 27 comprend, comme le système à alterno-démarreur classique représenté sur la Figure 1, une machine électrique tournante 3 présentant un inducteur 8 alimenté par un circuit d'excitation 10, des enroulements de phases 11 alimentés par un convertisseur alternatif-continu réversible 20 fonctionnant en onduleur 12, et un capteur de la position 15 du rotor 8.

Mais, à la différence du système à alterno-démarreur classique, l'onduleur 12 est alimenté par une super-capacité 26 au lieu d'être connecté directement à la batterie de bord.

Dans le fonctionnement en génératrice, la machine électrique 3 charge la super-capacité 26 au moyen du convertisseur alternatif-continu réversible 20 fonctionnant en redresseur et fournit au réseau électrique de bord une tension Vbat+X supérieure à la tension de batterie Vbat.

Des circuits de conversion d'énergie 29 constitués par un convertisseur continu-continu, permettent des échanges d'énergie électrique entre la batterie 28 de bord qui fournit un premier réseau de bord à la tension Vbat et la super-capacité 26 qui fournit un second réseau de bord à la tension Vbat+X.

Un circuit de commande 13 pilote le circuit d'excitation 10, le convertisseur alternatif-continu réversible 20, dont l'onduleur 12, constituant les circuits de puissance 14 du système à alterno-démarreur 1, et les circuits de conversion d'énergie 29.

Le circuit de commande 13 est contrôlé par une unité de contrôle électronique 17, 17a interfacée avec le bus CAN 19.

Le système micro-hybride 27 représenté sur la Figure 2 permet de mettre en oeuvre une fonction de freinage récupératif et/ou d'assistance en couple : une partie de l'énergie mécanique du freinage transformée en énergie électrique par la machine électrique 3 fonctionnant en génératrice, et stockée dans la super-capacité 26, est utilisée pour apporter un complément de couple au moteur thermique 2 en faisant fonctionner la machine électrique 3 en moteur électrique.

Mais, comme il a déjà été vu, on ne peut pas se protéger dans un système micro-hybride 27 comme dans un système à alterno-démarreur 1 classique, à la fois contre les fonctions de redémarrage et/ou d'assistance en couple intempestifs par une simple ligne d'inhibition Auth. Ond..

En effet, la fonction de redémarrage ne peut être activée que si la chaîne de traction est ouverte alors que la fonction d'assistance en couple ne peut être activée que lorsque la chaîne de traction soit fermée. Ces deux conditions sont donc contradictoires.

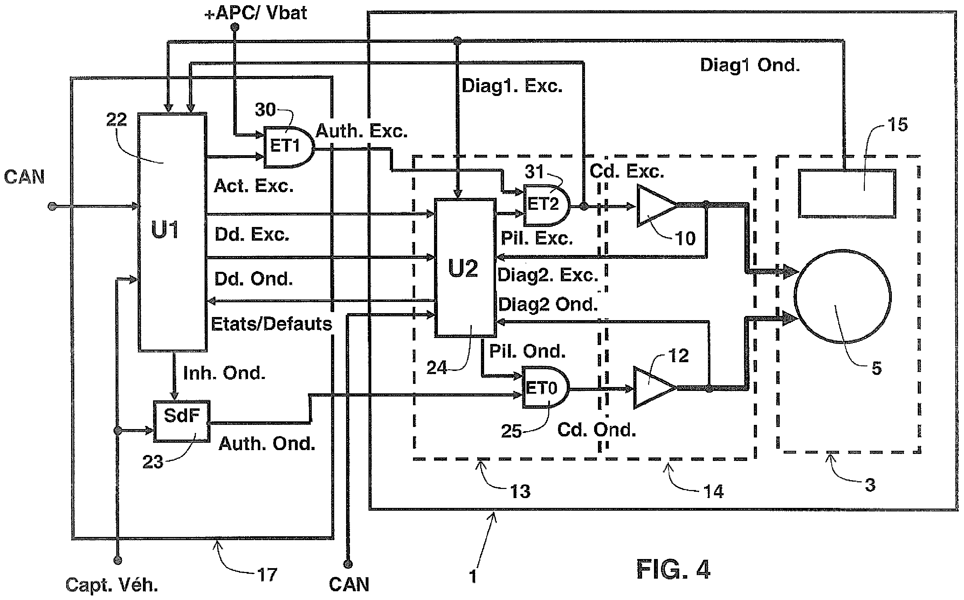

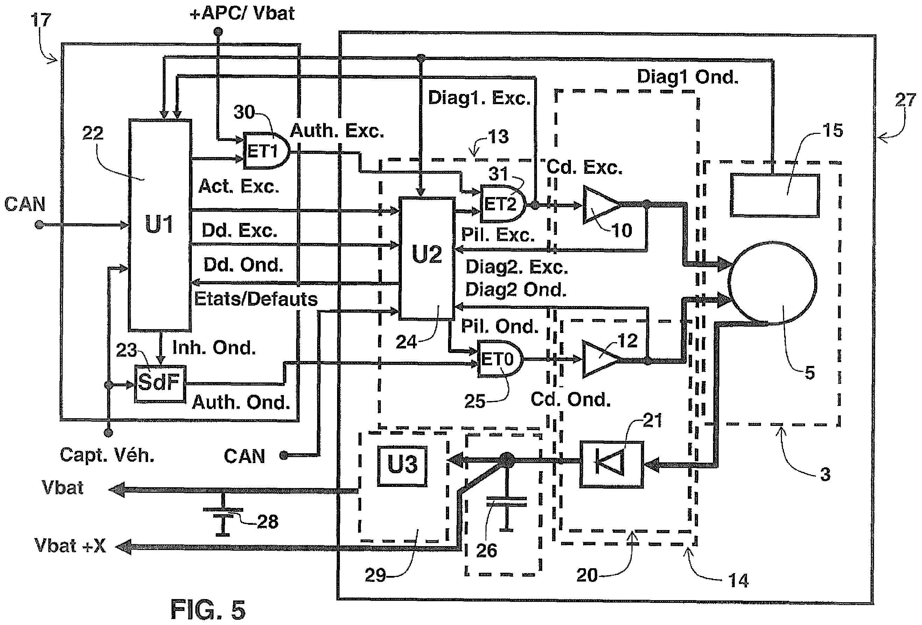

La Figure 4 montre une solution de sécurisation appliquée au système à alterno-démarreur 1 classique montré sur la Figure 1, qui s'applique également au système micro-hybride 27 montré sur la Figure 2, comme le montre bien la Figure 5 et 6.

Selon un principe général de l'invention, on propose, dans le cadre d'un système réalisant les fonctions de redémarrage automatique et/ou d'assistance en couple du moteur, d'utiliser une architecture distribuée :
- d'une part, un organe dit de décision (où sont implémentées les stratégies de haut niveau), tel que l'unité de contrôle électronique 17, 17a du véhicule, ou une autre unité de traitement disponible ;
- d'autre part, un organe d'exécution (la machine réversible 3 et son électronique associée 13, 14) commandée par l'organe de décision décrit ci dessus.

En distribuant ainsi l'architecture dans deux organes séparés, on évite l'introduction de dispositifs de sécurité additionnel dans le système à alterno-démarreur 1 classique représenté sur la Figure 1, tel qu'un microcontrôleur additionnel.

De plus, en utilisant deux microprocesseurs 22, 24 séparés mais appartenant, éventuellement, dans le cadre d'une architecture de type micro-hybride, comme montrée sur la Figure 2 et 6, au système micro-hybride 27, on évite également de modifier l'architecture du véhicule dans le cas où la fonction n'est pas présente.

Dans l'architecture représentée sur les Figure 6a et 6b, le premier microprocesseur 22 est celui déjà présent dans un second circuit de commande 17a des circuits de conversion d'énergie 29, qui a donc la fonction du premier microprocesseur 22 de l'unité de contrôle électronique 17 représentée sur la Figure 4. Le second circuit de commande 17a joue alors le rôle, dans l'architecture représentée sur les Figure 6a et 6b, de l'unité de contrôle électronique 17 représentée sur la Figure 4.

En complément, afin de résoudre les problématiques liées à l'activation intempestive du mode Moteur (activation intempestive des fonctions redémarrage et/ou assistance en couple), l'architecture entre les deux microprocesseurs 22,24 est contrainte, notamment afin de ne pas déclencher intempestivement un de ces modes en cas de panne simple de l'un des deux microprocesseurs 22,24 (augmentation du niveau de sécurité de la fonction globale).

Afin de s'affranchir d'une panne simple du premier microprocesseur 22 l'unité de contrôle électronique 17, 17a, il convient d'implémenter au sein du second microprocesseur 24 du circuit de commande 13 des circuits de puissance 14 des stratégies d'évaluation ou de diagnostic des ordres donnés par l'unité de contrôle électronique 17, 17a.

Le but de ces stratégies est de ne pas autoriser la réalisation d'une demande de l'unité de contrôle électronique 17, 17a, par exemple une demande de fermeture du circuit d'excitation Dd. Exc., ou de mise en fonction de l'onduleur Dd. Ond., lorsque celle ci est jugée inappropriée.

Pour ce faire, le circuit de commande 13 des circuits de puissance 14 doit recevoir de l'extérieur du système certaines informations de contexte (à titre d'exemple : la vitesse du véhicule, l'état du moteur ou l'état de la chaîne de traction), au moyen par exemple (et préférentiellement) du réseau de bord véhicule CAN pour ne pas impacter le coût de la fonction avec un grand nombre d'Entrées Sorties supplémentaires.

Dans ces conditions, le système à alterno-démarreur 1 devient un actuateur intelligent dans la mesure où il peut alors refuser une des demandes, Dd. Exc. ou Dd. Ond., de l'unité de contrôle électronique 17, 17a.

Afin de s'affranchir d'une panne simple du second microprocesseur 24 agencé dans l'organe d'exécution (circuit de commande 13 des circuits de puissance 14, dont l'onduleur 12), il convient :
- soit de sécuriser la demande d'activation en aval du second microprocesseur 24, par exemple au moyen d'un ET logique 25 entre un signal de pilotage de l'onduleur Pil. Ond. provenant du second microprocesseur 24, et un signal Auth. Ond. non généré par ce second microprocesseur 24 (solution qui a été expliquée en liaison avec la Figure 3, de l'état de la technique) ;
- soit de diagnostiquer au moyen du premier microprocesseur 22 de l'unité de contrôle électronique 17, 17a l'activation des circuits de puissance 14 (par exemple au moyen d'une ligne de diagnostic Diag1. Exc.) et de faire agir celui-ci en conséquence.

(On notera que, de cette manière on n'agit pas sur la cause, puisque l'on commandera l'activation des circuits de puissance 14, mais on réduit le risque, car ce mode ne dure pas longtemps, le temps de la boucle).

On peut également combiner ces deux types de sécurités en utilisant par exemple le premier type de sécurité pour la fonction « redémarrage » et le deuxième type de sécurité pour la fonction « assistance en couple » (ou vice-versa); ceci permet de s'affranchir de la problématique sur la condition « chaîne de traction » citée précédemment.

De même, ces deux sécurités peuvent être réalisées à partir de, ou vers l'unité de contrôle électronique 17, 17a, ce qui leur permet d'être disponibles même en cas de défaillance du second microprocesseur 24 de l'organe d'exécution 13. Cette solution présente l'avantage, dans le cadre d'un système micro-hybride de type « 14+X », de ne pas impacter le reste de l'architecture électrique véhicule (notamment dans le cadre d'une fonction optionnelle).

La Figure 4 montre la mise en oeuvre des principes ci-dessus dans le cas d'un système à alterno-démarreur 1 classique du type de celui représenté sur la Figure 1.

Dans cette architecture, l'organe de décision, constitué par l'unité de contrôle électronique 17, 17a du véhicule, acquiert des premiers signaux d'information Capt. Véh. provenant de l'extérieur du système, et utilise ces premiers signaux d'information pour générer un signal d'autorisation d'excitation Auth. Excit. de la machine électrique 1.

Ce signal d'autorisation d'excitation Auth. Exc. est véhiculé vers le circuit d'excitation 10, préférentiellement par une première liaison filaire dédiée, afin de permettre l'excitation de la machine 3.

Comme montré sur la Figure 4, l'excitation ne peut avoir lieu que par un premier signal de commande Cd. Exc. résultant de la validation d'un premier signal de pilotage Pil. Exc. par le signal de d'autorisation de l'excitation Auth. Exc. de l'unité de contrôle électronique 17, 17a.

Le premier signal de pilotage Pil. Exc. est généré par le second microprocesseur 24 en réponse à de demande de fermeture du circuit d'excitation Dd. Exc. provenant de l'unité de contrôle électronique 17, 17a.

Entre cette demande Dd. Exc. (entrée du second microprocesseur 24 et la commande (sortie du second microprocesseur 24), un processus de validation de l'ordre peut être mis en oeuvre afin d'empêcher l'activation de l'excitation du fait d'une simple erreur du premier microprocesseur 22 de l'unité de contrôle électronique 17, 17a. Ce processus de validation se réalise au moyen de signaux d'informations provenant du bus de communication de données du véhicule CAN..

Le processus de validation peut revêtir différentes formes, et notamment à titre d'exemple
• La vérification de la cohérence entre la demande d'activation des modes générateur ou moteur (démarreur ou assistance en couple), et l'information de présence de l'information après contact.

Ce processus de validation complémente le signal d'autorisation Auth. Exc. qui valide le premier signal de pilotage Pil. Exc. dans une première porte logique ET 31, comme montré sur les Figures 4 et 6.

En variante, on réalise sur ce signal d'autorisation de l'excitation Auth. Exc. une anticipation de l'activation de la mise de contact afin de préfluxer la machine électrique 3.

Dans ce cas, le signal d'anticipation peut revêtir plusieurs valeurs comme (à titre d'exemple):
- Décondamnation du véhicule à distance ;
- Détection d'approche d'un utilisateur autorisé ;
- Ouverture d'une porte ;
- Fermeture d'une porte ;
- Insertion de la clé de contact ;
- Appui sur la pédale d'embrayage ;
- Appui sur la pédale de frein ET levier de la boite de vitesse en position neutre.

La commutation de Auth. Exc est réalisée, comme montré sur les Figures 4 et 6, préférentiellement dans l'unité de contrôle électronique 17, 17a au moyen des informations fournies au premier microprocesseur 22 par l'intermédiaire du bus de communication de données du véhicule CAN. Elle se réalise par validation du signal d'activation Act. Exc de l'excitation. Ce signal est ensuite transformé en signal d'autorisation de la fermeture du circuit d'excitation Auth. Exc. qu'après avoir été validé dans une deuxième porte logique ET 30 par le signal de contact +APC / Vbat représentatif de la mise sous tension du réseau électrique de bord.

Ceci comporte un intérêt particulier dans le cas d'un système micro-hybride 27, comme montré sur la Figure 5 ou 6, où l'on dispose d'un stockeur d'énergie 26, puisque dans ce cas, on peut agir sur ce signal d'autorisation Auth. Exc. par l'intermédiaire du signal Act. Exc et interdire ainsi l'excitation quand un défaut du stockeur 26 est détecté (vu par un signal de diagnostic supplémentaire dans un dispositif décrit dans la demande co-pendante, déjà citée), ce qui permet d'augmenter le niveau de sécurité de la fonction globale en diminuant le risque général du risque de court-circuit au niveau machine électrique 3.

Le contrôle sécurisé de la mise en fonction de l'onduleur 12 repose sur les mêmes principes que celui du circuit d'excitation 10.

Il a déjà été vu, en liaison avec la Figure 3, que l'unité de contrôle électronique 17, 17a du véhicule, acquiert des signaux d'information Capt. Véh. provenant de l'extérieur du système (sous forme filaire ou par l'intermédiaire du bus de données CAN), et utilise ces signaux pour générer une autorisation d'activation du mode moteur Auth. Ond. de la machine électrique 3.

Cette autorisation est transmise au circuit de commande 13 des circuits de puissance 14, comprenant l'onduleur 12, afin de valider le second signal de pilotage Pil. Ond..

De même que précédemment, le second microprocesseur 24 du circuit de commande 13 acquiert les demandes Dd. Ond. de l'unité de contrôle électronique 17, 17a afin de générer un second signal de commande Cd. Ond. du mode moteur vers l'onduleur 12. De même que pour l'excitation, un processus de validation de l'ordre peut être mis en oeuvre afin d'empêcher l'activation de l'onduleur du fait d'une simple erreur du premier microprocesseur 22 agencé dans l'unité de contrôle électronique 17, 17a.

Comme précédemment, un tel processus de validation se réalise notamment par l'acquisition par le second microprocesseur 24 de seconds signaux d'information provenant du bus de communication de données du véhicule CAN.

Le processus de validation peut revêtir plusieurs formes, notamment à titre d'exemple :
• La vérification de la cohérence entre la demande d'activation du mode moteur Dd. Ond. (démarreur ou assistance en couple) et vitesse véhicule et/ou moteur. (Chacune de ces fonctions ne peut être commandé que dans une certaine plage de vitesse véhicule et/ou moteur)
Ou encore
- La vérification de la cohérence entre la demande d'activation du mode moteur Dd. Ond. (démarreur ou assistance en couple) et l'état de la chaîne de traction (chacune de ces fonctions ne peut être commandé qu'avec un état donné de la chaîne de traction)

En complément, aussi bien dans le cas du premier signal de commande Cd. Exc. du circuit d'excitation, que dans le cas du second signal de commande Cd. Ond. de l'onduleur 12, un diagnostic de l'activation des circuits de puissance 14 est effectué.

Ces signaux de diagnostic, Diag2. Ond. et, Diag2. Exc., permettent alors la mise en oeuvre d'une contre-mesure (c'est à dire d'une action immédiate dans le sens inverse de la commande) au sein du circuit de commande 13.

Cependant, un tel processus n'est pas suffisant pour couvrir l'ensemble des cas d'une activation intempestive de l'un des circuits de puissance 14 (driver du circuit d'excitation 10, ou driver 12 des enroulements de phases 11 de la machine électrique 3).

En effet, dans le cas où l'activation intempestive provient du second microprocesseur 24, on ne peut considérer cette contre-mesure comme valide : le second microprocesseur 24 qui a produit l'ordre intempestif ne peut être considéré comme pouvant réaliser convenablement la contre mesure.

C'est dans ce but que sont générés des signaux de diagnostics Diag1. Ond. et, Diag1. Exc., transmis vers l'unité de contrôle électronique 17, 17a.

Afin de préserver le niveau de sécurité, ces signaux de diagnostics Diag1. Ond. et Diag1 Exc., sont transmis à l'unité de contrôle électronique 17, 17a chacun au moyen, respectivement, d'une deuxième et troisième liaison filaire dédiée, et sans faire appel à une quelconque mise en forme par le second microprocesseur 24 du circuit de commande 13.

Le but d'utiliser de telles liaisons dédiées est de laisser le premier microprocesseur 22 de l'unité de contrôle électronique 17, 17a décoder les éventuelles défaillances ; elles permettent de s'affranchir d'une défaillance du second microprocesseur 24, et elles permettent de transmettre l'information sans délai à l'unité de contrôle électronique 17, 17a.

Un tel dispositif permet de diagnostiquer un mode moteur intempestif (démarrage-relance et/ou assistance en couple), et permet de s'affranchir de la dualité de la condition sur la ligne d'inhibition Auth. Ond..

La sécurisation par le premier signal de diagnostic Diag1. Ond. est réalisée de la manière suivante :
Après détection, le premier microprocesseur 22 de l'organe de décision inhibe le mode moteur en inhibant sa demande d'un tel mode Dd. Ond. et/ou en agissant de façon interne sur le premier circuit de décision 23 en logique câblée produisant le signal d'autorisation de mise en fonction du mode moteur Auth_Ond. par l'intermédiaire du signal interne Inh. Ond..

Il est à noter que, comme énoncé précédemment, ce mécanisme n'empêche pas la commande intempestive, mais réduit très fortement le temps d'exposition au risque.

En complément, à tout ce processus, le premier microprocesseur 22 de l'unité de contrôle électronique 17, 17a pourra informer ou demander d'informer le reste du véhicule (et donc le client) de la défaillance du système, et de la présence du risque. Cette information se réalisant à partir de la détection d'une valeur inattendue sur le signal Diag1. Ond.

De même, le second signal de diagnostic Diag1. Exc. permet de détecter, en fonction du schéma de l'onduleur, la fermeture du circuit d'excitation.

Les Figures 4, 5, 6a et 6b représentent le cas où ce second signal de diagnostic Diag1. Exc. est prélevé avant le driver de puissance du circuit d'excitation 10.

En variante, ce second signal de diagnostic Diag1. Exc. est avantageusement prélevé après le driver de puissance 10.

Les deux configurations présentent des avantages et inconvénients :
Dans la première configuration, le coût des composants nécessaires à la détection est faible, car il s'agit d'un signal de faible puissance, mais on n'a pas une image directe de l'état du driver.
Dans la seconde configuration, le coût de la détection est plus important, car il s'agit d'un signal de puissance qu'il faut véhiculer vers l'organe de décision, mais une mesure redondante du courant d'excitation est possible en même temps que la détection de la mise en fonction du driver de puissance 10.

La première configuration représentée sur les Figures 4, 5, 6a et 6b combine les contraintes coût et détection du risque, puisque ce diagnostic permet de détecter l'activation intempestive de l'excitation, ce qui revient en fait, en regard d'un démarrage et/ou d'une assistance en couple intempestive, à la perte d'une seule barrière de sécurité.

On notera, en résumé, que le procédé et dispositif de contrôle sécurisé d'un système à alterno-démarreur 1, selon l'invention, apporte de nouvelles barrières de sécurité supplémentaires par rapport à la seule barrière Auth. Ond. connue de l'état de la technique, représenté sur la Figure 3, à savoir :
- l'implémentation au sein du microprocesseur 24 du circuit de commande 13 des circuits de puissance 14 de stratégies d'évaluation ou de diagnostic des ordres donnés par le premier microprocesseur 22.
- l'implémentation au sein de l'unité de contrôle électronique 17, 17a d'un diagnostic de l'état activé de la machine électrique indépendant de l'état du microprocesseur 24 du circuit de commande 13.
- l'autorisation et la validation de l'excitation Auth. Exc;

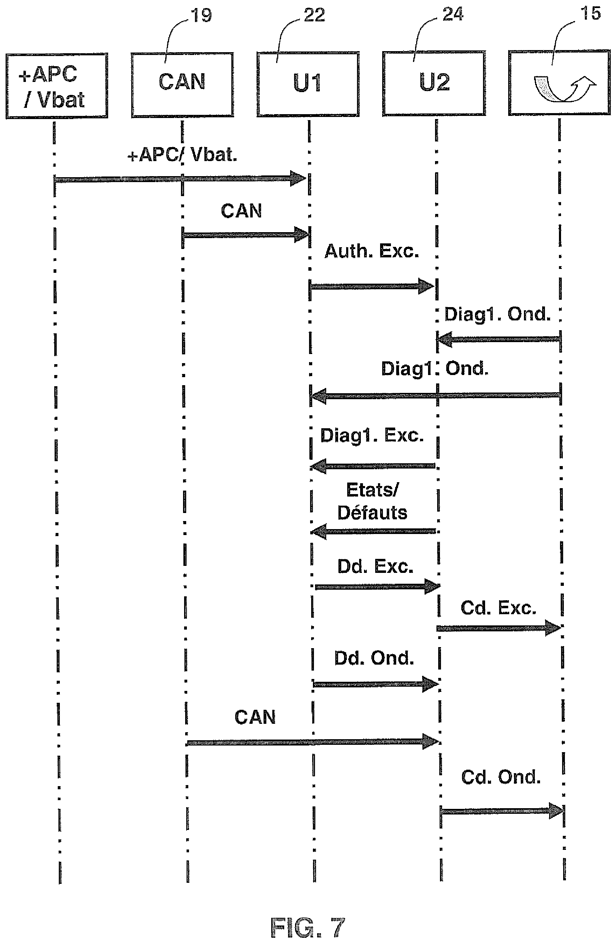

Les différents signaux de contrôle et de diagnostic échangés entre les premier et second microprocesseurs 22, 24, le bus de communication de données 19, et le moyen de détection de rotation 15, mis en oeuvre par l'invention, sont représentés schématiquement sur la Figure 7.

Les différents signaux de contrôle et de diagnostic mis en oeuvre par l'invention sont réalisés, de préférence, de la manière suivante :

### Dd. Ond. et Dd. Exc.

Ces premiers signaux de contrôle sont formés par l'unité de contrôle électronique 17, 17a et transmis au moyen d'un réseau (privé ou public) vers le circuit de commande 13 des circuits de puissance 14 (onduleur 12 et circuit d'excitation 10)..

Ces premiers signaux de contrôle sont de plus formés à partir de l'acquisition de différents capteurs véhicules (boite de vitesse, frein, vitesse, tension batterie et/ou stockeur, état portes ...) et reflètent l'état système demandé (Mode Alternateur ou Régénérateur (Excitation = Etat Activé, Onduleur = Etat Désactivé) ; Mode Idle_Stop ou Delestage_Alternateur (Excitation = Etat Désactivé, Onduleur = Etat Désactivé), Mode Moteur (Excitation = Etat Activé, Onduleur = Etat Désactivé)).

En retour, le circuit de commande 13 renvoie (au moyen du même réseau) vers l'unité de contrôle électronique 17, 17a des signaux d'état (mode Alternateur, Régénérateur...), ainsi que des informations concernant ses défauts internes et modes et/ou transitions refusées (signaux d'état et défaut Etats/Défauts).

Les transitions refusées signalées sont, notamment :
- le refus du passage en mode générateur ou moteur du fait de la présence d'une incohérence entre l'information +APC reçue par le circuit de commande 13 et la demande émanant de l'unité de contrôle électronique 17, 17a ;
- le refus du passage en mode moteur du fait de la présence d'une incohérence entre la demande émanant de l'unité de contrôle électronique 17, 17a et la vitesse véhicule et/ou moteur (vitesse hors plage autorisée).

### Auth. Exc.

Comme décrit précédemment, ce second signal de contrôle est réalisé de préférence à partir d'un signal de contact +APC ou Vbat par la commutation d'un circuit de type SMART MOS 30 par le premier microprocesseur 22 de l'unité de contrôle électronique 17, 17a (en fonction de la stratégie implémentée dans cette unité).

### Diag1. Ond.

Ce premier signal de diagnostic est réalisé, de préférence, à partir du signal issu du capteur de position 15 de la machine électrique 3. Ce signal est décodé par le premier microprocesseur 22 de l'unité de contrôle électronique 17, 17a de la même manière que par le second microprocesseur 24 du circuit de commande 13 des circuits de puissance 14 comprenant l'onduleur 12, dans un mode de réalisation comme montré aux Figures 3, 5 et 6a.

Dans une tel cas, l'unité de contrôle électronique 17, 17a reçoit et utilise les seconds signaux d'information CAN provenant du véhicule afin de ne prendre en compte ce premier de diagnostic que dans certains contextes.

A titre d'exemples, on peut citer :
- l'activation d'un starter additionnel (pour éviter de détecter « intempestivement » le démarrage réalisé par ce moyen) ;
- la présence d'une vitesse véhicule (pour éviter de détecter « intempestivement » le démarrage à la poussette réalisé volontairement par le client) ;
- l'estimation du couple réalisé par le reste du véhicule (pour éviter de détecter « intempestivement » une variation assistance en couple réalisée normalement à l'extérieur du système (moteur)) ;

En variante, un autre signal de diagnostic de ce type est réalisé à partir de tout signal pouvant être image de l'activation du mode moteur au niveau de la machine électrique 3, et il peut se substituer alors au premier signal de diagnostic Diag1.Ond. traité par les premier et second microprocesseurs 22, 24.

La Figure 6b met en oeuvre cette variante, qui constitue un deuxième mode de réalisation :
La mesure différentielle par l'unité de contrôle électronique 17, 17a de la tension du stockeur d'énergie 26, dans une architecture de type micro-hybride, est donc également un candidat pour un tel signal de diagnostic, notamment pour sécuriser le mode « assistance en couple », puisque l'activation de l'assistance en couple implique l'utilisation de la tension stockée, et donc sa décroissance.

Dans une telle hypothèse, et de la même manière que précédemment en ce qui concerne la rotation de la machine 3, l'unité de contrôle électronique 17, 17a devra recevoir une estimation de la puissance prélevée par les charges du réseau Vbat+X (si elle existent) de façon à ne pas prendre en compte dans le diagnostic cette puissance utilisée par ailleurs.

Il est à noter que cette variante de réalisation est tout particulièrement intéressante dans le cas où l'on réalise la combinaison du stockeur d'énergie 26 et du convertisseur continu-continu 29 d'un même organe de puissance. En effet, dans ce cas, tous les signaux cités sont des signaux internes, et il n'est pas nécessaire d'avoir de lignes supplémentaires.

### Diag1. Exc.

Ce deuxième signal de diagnostic Diag1. Exc. est de préférence réalisé au moyen d'un circuit à diode (diode et résistance d'adaptation).

### Diag2. Ond. et Diag2. Exc.

Ces signaux de diagnostic sont câblés au niveau de l'électronique des circuits de puissance 14 (onduleur 12 et circuit d'excitation 10). Ce sont de simples adaptations de signaux afin d'être « reinjectées » dans le second microprocesseur 24 du circuit de commande 13 des circuits de puissance 14 (éventuellement sur des entrées numériques).

### Auth. Ond.

Un circuit à transistor 23 (portes logiques) prend en compte le passage d'un signal d'entrée provenant d'un des capteurs du véhicule Capt. Véh. (capteur de la boite de vitesse, par exemple) à une valeur invalide, et le signal d'inhibition Inh_Ondul provenant du premier microprocesseur 22 de l'unité de contrôle électronique 17, 17a pour générer ce signal de contrôle.

### Inh. Ond.

Ce signal de contrôle est généré, comme indiqué précédemment, par le premier microprocesseur 22 de l'unité de contrôle électronique 17, 17a au moment de la détection du premier signal de diagnostic Diag1.Ond..

Les avantages de l'architecture décrite ci-dessus, en liaison avec les Figures 4, 5, 6a et 6b sont que :
- le nombre d'entrées/sorties nécessaires au fonctionnement sécurisé du circuit de commande 13 et des circuits de puissance 14 est minimisé ;
- le circuit de commande 13 ne supporte pas seul la totalité de l'interface avec l'extérieur du système ;
- la mise en oeuvre d'un microprocesseur supplémentaire est évitée.

Il est encore à remarquer que, dans le cadre d'un système micro-hybride à freinage récupératif et/ou assistance en couple, aucune entrée/sortie du système n'est spécifique à l'une de ces fonctionnalités.

## Revendications

1. Procédé de contrôle sécurisé d'un système à alterno-démarreur (1,27) couplé à un moteur thermique (2) d'un véhicule, ledit véhicule comportant au moins une unité de contrôle électronique (17), des capteurs véhicule, un bus de communication de données (19) et un réseau électrique de bord (Vbat, Vbat+X), ledit système à alterno-démarreur (1,27) comportant au moins une machine électrique tournante (3) munie d'un moyen de détection de rotation (15), des circuits de puissance (14) comportant au moins un onduleur (12) et un circuit d'excitation (10) alimentant ladite machine électrique tournante (3), et un circuit de commande (13) desdits circuits de puissance (14), ledit procédé consistant à:
- générer au moyen de ladite unité de contrôle électronique (17) des signaux de contrôle (Dd. Exc., Dd. Ond., Auth. Exc., Auth. Ond) dudit système à alterno-démarreur (1,27) à partir de premiers signaux d'information (Capt. Véh.) représentatifs d'un état de fonctionnement dudit véhicule provenant desdits capteurs véhicule;
- générer au moyen dudit circuit de commande (13) des signaux de commande (Cd. Exc., Cd. Ond.) desdits circuits de puissance (14) à partir de signaux de diagnostic (Diag1. Ond., Diag2. Exc., Diag2. Ond.) représentatifs d'un état de fonctionnement dudit système à alterno-démarreur ;
**caractérisé en ce que** ledit procédé consiste en outre à:
- générer lesdits signaux de contrôle (Dd. Exc., Dd. Ond., Auth. Exc., Auth. Ond) au moyen de ladite unité de contrôle électronique (17) à partir de plus d'au moins un premier signal de diagnostic (Diag1. Ond.) parmi lesdits signaux de diagnostic (Diag1. Ond., Diag1. Exc., Diag2. 0nd., Diag2. Exc.) ;
- générer lesdits signaux de commande (Cd. Ond., Cd. Exc.) au moyen dudit circuit de commande (13) à partir de plus de seconds signaux d'information (CAN) provenant dudit bus de communication de données (19).

2. Procédé de contrôle sécurisé d'un système à alterno-démarreur (1,27) couplé à un moteur thermique (2) d'un véhicule selon la revendication 1 précédente, **caractérisé en ce qu'**au moins un premier signal de commande (Cd. Exc.) parmi lesdits signaux de commande (Cd. Ond., Cd. Exc.) constitue au moins un deuxième signal de diagnostic (Diag1. Exc.) parmi lesdits signaux de diagnostic (Diag1. Ond., Diag1. Exc., Diag2. Ond., Diag2. Exc.).

3. Procédé de contrôle sécurisé d'un système à alterno-démarreur (1,27) couplé à un moteur thermique (2) d'un véhicule selon la revendication 2 précédente, **caractérisé en ce qu'**il consiste en outre à :
- générer au moins un premier signal de contrôle (Dd. Ond., Dd. Exc.) parmi lesdits signaux de contrôle (Dd. Exc., Dd. Ond., Auth. Exc., Auth. Ond.) au moyen d'un premier microprocesseur (22) agencé dans ladite unité de contrôle électronique (17) et traitant au moins ledit premier signal de diagnostic (Diag1. Ond.) et ledit deuxième signal de diagnostic (Diag1. Exc.) ;
- générer au moins un second signal de contrôle (Auth. Exc.) parmi lesdits signaux de contrôle (Dd. Exc. , Dd. Ond. , Auth. Exc., Auth. Ond) au moyen d'un premier circuit de décision (23) en logique câblée agencé dans ladite unité de contrôle (17); et
- générer lesdits signaux de commande (Cd. Ond., Cd. Exc.) au moyen exclusivement d'un second circuit de décision (25,31) en logique câblée agencé dans ledit circuit de commande (13).

4. Procédé de contrôle sécurisé d'un système à alterno-démarreur (1,27) couplé à un moteur thermique (2) d'un véhicule selon la revendication 3 précédente, **caractérisé en ce qu'**il consiste en outre à :
- générer ledit au moins second signal de contrôle (Auth. Exc.) en fonction d'au moins un premier signal d'activation (Act. Exc.) parmi des signaux d'activation et/ou d'inhibition (Act. Exc., Inh. Ond.) générés par ledit premier microprocesseur (22) et d'un signal de contact (+APC/ Vbat) représentatif de la mise sous tension dudit réseau électrique de bord ;
- générer ledit au moins premier signal de commande (Cd. Exc.) en fonction dudit au moins second signal de contrôle (Auth. Exc.) et d'au moins un premier signal de pilotage (Pil. Exc.) parmi des signaux de pilotage (Pil. Ond., Pil. Exc.) générés par un second microprocesseur (24) agencé dans ledit circuit de commande (13).

5. Procédé de contrôle sécurisé d'un système à alterno-démarreur (1,27) couplé à un moteur thermique (2) d'un véhicule selon la revendication 4 précédente, **caractérisé en ce qu'**il consiste en outre à transmettre des signaux d'état/défaut (Etats/Défauts) au moyen dudit second microprocesseur (24) vers ledit premier microprocesseur (22).

6. Procédé de contrôle sécurisé d'un système à alterno-démarreur (1,27) couplé à un moteur thermique (2) d'un véhicule selon l'une quelconque des revendications 2 à 5 précédentes, **caractérisé en ce que** l'on commande ledit circuit d'excitation (10) par ledit premier signal de commande (Cd. Exc.).

7. Procédé de contrôle sécurisé d'un système à alterno-démarreur (1,27) couplé à un moteur thermique (2) d'un véhicule selon l'une quelconque des revendications 1 à 6 précédentes, **caractérisé en ce que** l'on fournit ledit premier signal de diagnostic (Diag1. Ond.) au moyen dudit moyen de détection de rotation (15).

8. Dispositif de contrôle sécurisé d'un système à alterno-démarreur (1,27) couplé à un moteur thermique (2) d'un véhicule adapté à la mise en oeuvre du procédé selon l'une quelconque des revendications 1 à 7 précédentes, ledit véhicule comportant au moins une unité de contrôle électronique (17), des capteurs véhicule, un bus de communication de données (19) et un réseau électrique de bord (Vbat, Vbat+X), ledit système à alterno-démarreur (1,27) comportant au moins une machine électrique tournante (3) munie d'un moyen de détection de rotation (15), des circuits de puissance (14) comportant au moins un onduleur (12) et un circuit d'excitation (10) alimentant ladite machine électrique tournante (3), et un circuit de commande (13) desdits circuits de puissance (14), ledit dispositif étant du type de ceux où:
- ladite unité de contrôle électronique (17) reçoit des premiers signaux d'information (Capt. Véh.) représentatifs d'un état de fonctionnement dudit véhicule provenant desdits capteurs véhicule et génère des signaux de contrôle (Dd. Exc., Dd. Ond., Auth. Exc., Auth. Ond.) dudit système à alterno-démarreur (1,27) ;
- ledit circuit de commande (13) reçoit des signaux de diagnostic (Diag2. Exc., Diag2. Ond.) représentatifs d'un état de fonctionnement dudit système à alterno-démarreur (1,27) et génère des signaux de commande (Cd. Exc., Cd. Ond.) desdits circuits de puissance (14) ;
**caractérisé en ce que** :
- ladite unité de contrôle électronique (17) reçoit de plus au moins un premier signal de diagnostic (Diag1. Ond.) parmi lesdits signaux de diagnostic (Diag1. Ond., Diag1. Exc., Diag2. 0nd., Diag2. Exc.);
- ledit circuit de commande (13) reçoit de plus des seconds signaux d'information (CAN) dudit bus de communication de données (19).

9. Dispositif de contrôle sécurisé d'un système à alterno-démarreur (1,27) couplé à un moteur thermique (2) d'un véhicule selon la revendication 8 précédente, **caractérisé en ce qu'**au moins un premier signal de commande (Cd. Exc.) parmi lesdits signaux de commande (Cd. Ond., Cd. Exc.) constitue au moins un deuxième signal de diagnostic (Diag1. Exc.) parmi lesdits signaux de diagnostic (Diag1. Ond., Diag1. Exc., Diag2. Ond., Diag2. Exc.).

10. Dispositif de contrôle sécurisé d'un système à alterno-démarreur (1,27) couplé à un moteur thermique (2) d'un véhicule selon l'une quelconque des revendications 8 ou 9 précédentes, **caractérisé en ce qu'**il comprend en outre :
- un premier microprocesseur (22) agencé dans ladite unité de contrôle électronique (17) traitant au moins ledit premier signal de diagnostic (Diag1. Ond.) et ledit second signal de diagnostic (Diag1. Exc.), et générant au moins un premier signal de contrôle (Dd. Ond., Dd. Exc.) parmi lesdits signaux de contrôle (Dd. Exc., Dd. Ond., Auth. Exc., Auth. Ond.) ;
- un premier circuit de décision (23) en logique câblée agencé dans ladite unité de contrôle (17) et générant au moins un second signal de contrôle (Auth. Exc.) parmi lesdits signaux de contrôle (Dd. Exc., Dd. Ond., Auth. Exc., Auth. Ond.) ;
- un second circuit de décision (25,31) en logique câblée agencé dans ledit circuit de commande (13) et générant lesdits signaux de commande (Cd. Ond., Cd. Exc.).

11. Dispositif de contrôle sécurisé d'un système à alterno-démarreur (1,27) couplé à un moteur thermique (2) d'un véhicule selon la revendication 10 précédente, **caractérisé en ce qu'**il comprend de plus :
- une première porte logique (30) produisant ledit au moins second signal de contrôle (Auth. Exc.) en fonction d'au moins un premier signal d'activation (Act. Exc.) parmi des signaux d'activation et/ou d'inhibition (Act. Exc., Inh. Ond.) générés par ledit premier microprocesseur (22) et d'un signal de contact (+APC/ Vbat) représentatif de la mise sous tension dudit réseau électrique de bord (Vbat);
- un second microprocesseur (24) agencé dans ledit circuit de commande (13) et générant des signaux de pilotage (Pil. Ond., Pil. Exc.) ;
- une deuxième porte logique (31) générant ledit au moins premier signal de commande (Cd. Exc.) en fonction dudit au moins second signal de contrôle (Auth. Exc.) et d'au moins un premier signal de pilotage (Pil. Exc.) parmi lesdits signaux de pilotage (Pil. Ond., Pil. Exc.).

12. Dispositif de contrôle sécurisé d'un système à alterno-démarreur (1,27) couplé à un moteur thermique (2) d'un véhicule selon la revendication 11 précédente, caractérisé en ce ledit second microprocesseur (24) transmet des signaux d'état/défaut (Etats/Défauts) vers ledit premier microprocesseur (22).

13. Dispositif de contrôle sécurisé d'un système à alterno-démarreur (1,27) couplé à un moteur thermique (2) d'un véhicule selon l'une quelconque des revendications 9 à 12 précédentes, **caractérisé en ce que** ledit premier signal de commande (Cd. Exc.) commande ledit circuit d'excitation (10).

14. Dispositif de contrôle sécurisé d'un système à alterno-démarreur (1,27) couplé à un moteur thermique (2) d'un véhicule selon l'une quelconque des revendications 8 à 13 précédentes, **caractérisé en ce que** ledit premier signal de diagnostic (Diag1. Ond.) est fourni par ledit moyen de détection de rotation (15).

15. Système à alterno-démarreur (1, 27) destiné à un moteur thermique (2) d'un véhicule, ledit système à alterno-démarreur étant équipé dudit dispositif de contrôle sécurisé selon l'une quelconque des revendications 8 à 14 précédentes.

16. Système à alterno-démarreur (27) destiné à un moteur thermique (2) d'un véhicule selon la revendication 15 comprenant de plus une fonction de freinage récupératif de type micro-hybride.

## Patentansprüche

1. Verfahren zur sicheren Steuerung einer an eine Wärmekraftmaschine (2) eines Fahrzeugs gekoppelten Generator-Starter-Anordnung (1, 27), wobei das Fahrzeug mindestens eine elektronische Steuereinheit (17), Fahrzeugsensoren, einen Datenkommunikationsbus (19) und ein elektrisches Bordnetz (Vbat, Vbat+X) umfasst, wobei die Generator-Starter-Anordnung (1, 27) mindestens eine drehende elektrische Maschine (3), die mit einem Rotationsdetektionsmittel (15) versehen ist, Leistungsschaltungen (14), die mindestens einen Wechselrichter (12) und eine Anregungsschaltung (10) umfassen, welche die drehende elektrische Maschine (3) versorgt, und eine Befehlsschaltung (13) der Leistungsschaltungen (14) umfasst, wobei das Verfahren aus Folgendem besteht:
- Generieren, durch die elektronische Steuereinheit (17), von Steuersignalen (Dd. Exc., Dd. Ond., Auth. Exc., Auth. Ond.) der Generator-Starter-Anordnung (1, 27) aus ersten Informationssignalen (Capt. Véh.), die für einen Betriebszustand des Fahrzeugs repräsentativ sind, der von den Fahrzeugsensoren stammt;
- Generieren, durch die Befehlsschaltung (13), von Befehlssignalen (Cd. Exc., Cd. Ond.) der Leistungsschaltungen (14) aus Diagnosesignalen (Diag1. Ond., Diag2. Exc., Diag2. Ond.), die für einen Betriebszustand der Generator-Starter-Anordnung repräsentativ sind;
**dadurch gekennzeichnet, dass** das Verfahren ferner aus Folgendem besteht:
- Generieren der Steuersignale (Dd. Exc., Dd. Ond., Auth. Exc., Auth. Ond.) durch die elektronische Steuereinheit (17) ferner aus mindestens einem ersten Diagnosesignal (Diag 1. Ond.) unter den Diagnosesignalen (Diag1. Ond., Diag1. Exc., Diag2. Ond., Diag2. Exc.);
- Generieren der Befehlssignale (Cd. Ond., Cd. Exc.) durch die Befehlsschaltung (13) ferner aus zweiten Informationssignalen (CAN), die von dem Datenkommunikationsbus (19) stammen.

2. Verfahren zur sicheren Steuerung einer an eine Wärmekraftmaschine (2) eines Fahrzeugs gekoppelten Generator-Starter-Anordnung (1, 27) nach dem vorhergehenden Anspruch 1, **dadurch gekennzeichnet, dass** mindestens ein erstes Befehlssignal (Cd. Exc.) unter den Befehlssignalen (Cd. Ond., Cd. Exc.) mindestens ein zweites Diagnosesignal (Diag1. Exc.) unter den Diagnosesignalen (Diag1. Ond., Diag1. Exc., Diag2. Ond., Diag2. Exc.) darstellt.

3. Verfahren zur sicheren Steuerung einer an eine Wärmekraftmaschine (2) eines Fahrzeugs gekoppelten Generator-Starter-Anordnung (1, 27) nach dem vorhergehenden Anspruch 2, **dadurch gekennzeichnet, dass** dieses ferner aus Folgendem besteht:
- Generieren mindestens eines ersten Steuersignals (Dd. Ond., Dd. Exc.) unter den Steuersignalen (Dd. Exc., Dd. Ond., Auth. Exc., Auth. Ond.) durch einen ersten Mikroprozessor (22), der in der elektronischen Steuereinheit (17) angeordnet ist und mindestens das erste Diagnosesignal (Diag1. Ond.) und das zweite Diagnosesignal (Diag1. Exc.) behandelt;
- Generieren mindestens eines zweiten Steuersignals (Auth. Exc.) unter den Steuersignalen (Dd. Exc., Dd. Ond., Auth. Exc., Auth. Ond.) durch eine erste festverdrahtete Logikentscheidungsschaltung (23), die in der Steuereinheit (17) angeordnet ist; und
- Generieren der Befehlssignale (Cd. Ond., Cd. Exc.) ausschließlich durch eine zweite festverdrahtete Logikentscheidungsschaltung (25, 31), die in der Befehlsschaltung (13) angeordnet ist.

4. Verfahren zur sicheren Steuerung einer an eine Wärmekraftmaschine (2) eines Fahrzeugs gekoppelten Generator-Starter-Anordnung (1, 27) nach dem vorhergehenden Anspruch 3, **dadurch gekennzeichnet, dass** dieses ferner aus Folgendem besteht:
- Generieren mindestens des zweiten Steuersignals (Auth. Exc.) entsprechend mindestens einem ersten Aktivierungssignal (Act. Exc.) unter Aktivierungs- und/oder Inhibierungssignalen (Act. Exc., Inh. Ond.), die von dem ersten Mikroprozessor (22) generiert werden, und einem Kontaktsignal (+APC/ Vbat), das für das Einschalten des elektrischen Bordnetzes repräsentativ ist;
- Generieren mindestens des ersten Befehlssignals (Cd. Exc.) entsprechend dem mindestens zweiten Steuersignal (Auth. Exc.) und mindestens einem ersten Lenksignal (Pil. Exc.) unter Lenksignalen (Pil. Ond., Pil. Exc.), die von einem zweiten Mikroprozessor (24) generiert werden, der in der Befehlsschaltung (13) angeordnet ist.

5. Verfahren zur sicheren Steuerung einer an eine Wärmekraftmaschine (2) eines Fahrzeugs gekoppelten Generator-Starter-Anordnung (1, 27) nach dem vorhergehenden Anspruch 4, **dadurch gekennzeichnet, dass** dieses ferner aus dem Senden von Status/Fehler-Signalen (Etats/Defauts) durch den zweiten Mikroprozessor (24) an den ersten Mikroprozessor (22) besteht.

6. Verfahren zur sicheren Steuerung einer an eine Wärmekraftmaschine (2) eines Fahrzeugs gekoppelten Generator-Starter-Anordnung (1, 27) nach einem der vorhergehenden Ansprüche 2 bis 5, **dadurch gekennzeichnet, dass** die Anregungsschaltung (10) von dem ersten Befehlssignal (Cd. Exc.) Befehle erhält.

7. Verfahren zur sicheren Steuerung einer an eine Wärmekraftmaschine (2) eines Fahrzeugs gekoppelten Generator-Starter-Anordnung (1, 27) nach einem der vorhergehenden Ansprüche 1 bis 6, **dadurch gekennzeichnet, dass** das erste Diagnosesignal (Diag1. Ond.) durch das Rotationsdetektionsmittel (15) geliefert wird.

8. Vorrichtung zur sicheren Steuerung einer an eine Wärmekraftmaschine (2) eines Fahrzeugs gekoppelten Generator-Starter-Anordnung (1, 27), welche ausgelegt ist, das Verfahren nach einem der vorhergehenden Ansprüche 1 bis 7 durchzuführen, wobei das Fahrzeug mindestens eine elektronische Steuereinheit (17), Fahrzeugsensoren, einen Datenkommunikationsbus (19) und ein elektrisches Bordnetz (Vbat, Vbat+X) umfasst, wobei die Generator-Starter-Anordnung (1, 27) mindestens eine drehende elektrische Maschine (3), die mit einem Rotationsdetektionsmittel (15) versehen ist, Leistungsschaltungen (14), die mindestens einen Wechselrichter (12) und eine Anregungsschaltung (10) umfassen, welche die drehende elektrische Maschine (3) versorgt, und eine Befehlsschaltung (13) der Leistungsschaltungen (14) umfasst, wobei die Vorrichtung von dem Typ unter jenen ist, wo:
- die elektronische Steuereinheit (17) erste Informationssignale (Capt. Véh.) empfängt, die für einen Betriebszustand des Fahrzeugs repräsentativ sind, der von den Fahrzeugsensoren stammt, und Steuersignale (Dd. Exc., Dd. Ond., Auth. Exc., Auth. Ond.) der Generator-Starter-Anordnung (1, 27) generiert;
- die Befehlsschaltung (13) Diagnosesignale (Diag2. Exc., Diag2. Ond.) empfängt, die für einen Betriebszustand der Generator-Starter-Anordnung (1, 27) repräsentativ sind, und Befehlssignale (Cd. Exc., Cd. Ond.) der Leistungsschaltungen (14) generiert;
**dadurch gekennzeichnet, dass**:
- die elektronische Steuereinheit (17) ferner mindestens ein erstes Diagnosesignal (Diag.1. Ond.) unter den Diagnosesignalen (Diag1. Ond., Diag1. Exc., Diag2. Ond., Diag2. Exc.) empfängt;
- die Befehlsschaltung (13) ferner zweite Informationssignale (CAN) von dem Datenkommunikationsbus (19) empfängt.

9. Vorrichtung zur sicheren Steuerung einer an eine Wärmekraftmaschine (2) eines Fahrzeugs gekoppelten Generator-Starter-Anordnung (1, 27) nach dem vorhergehenden Anspruch 8, **dadurch gekennzeichnet, dass** mindestens ein erstes Befehlssignal (Cd. Exc.) unter den Befehlssignalen (Cd. Ond., Cd. Exc.) mindestens ein zweites Diagnosesignal (Diag1. Exc.) unter den Diagnosesignalen (Diag1. Ond., Diag1. Exc., Diag2. Ond., Diag2. Exc.) darstellt.

10. Vorrichtung zur sicheren Steuerung einer an eine Wärmekraftmaschine (2) eines Fahrzeugs gekoppelten Generator-Starter-Anordnung (1, 27) nach einem der vorhergehenden Ansprüche 8 oder 9, **dadurch gekennzeichnet, dass** diese ferner umfasst:
- einen ersten Mikroprozessor (22), der in der elektronischen Steuereinheit (17) angeordnet ist, mindestens das erste Diagnosesignal (Diag1. Ond.) und das zweite Diagnosesignal (Diag1. Exc.) behandelt und mindestens ein erstes Steuersignal (Dd. Ond., Dd. Exc.) unter den Steuersignalen (Dd. Exc., Dd. Ond., Auth. Exc., Auth. Ond.) generiert;
- eine erste festverdrahtete Logikentscheidungsschaltung (23), die in der Steuereinheit (17) angeordnet ist und mindestens ein zweites Steuersignal (Auth. Exc.) unter den Steuersignalen (Dd. Exc., Dd. Ond., Auth. Exc., Auth. Ond.) generiert;
- eine zweite festverdrahtete Logikentscheidungsschaltung (25, 31), die in der Befehlsschaltung (13) angeordnet ist und die Befehlssignale (Cd. Ond., Cd. Exc.) generiert.

11. Vorrichtung zur sicheren Steuerung einer an eine Wärmekraftmaschine (2) eines Fahrzeugs gekoppelten Generator-Starter-Anordnung (1, 27) nach dem vorhergehenden Anspruch 10, **dadurch gekennzeichnet, dass** diese ferner umfasst:
- einen ersten Logikport (30), der mindestens das zweite Steuersignal (Auth. Exc.) entsprechend mindestens einem ersten Aktivierungssignal (Act. Exc.) unter Aktivierungs- und/oder Inhibierungssignalen (Act. Exc., Inh. Ond.) erzeugt, die von dem ersten Mikroprozessor (22) generiert werden, und einem Kontaktsignal (+APC/ Vbat), das für das Einschalten des elektrischen Bordnetzes (Vbat) repräsentativ ist;
- einen zweiten Mikroprozessor (24), der in der Befehlsschaltung (13) angeordnet ist und Lenksignale (Pil. Ond., Pil. Exc.) generiert;
- einen zweiten Logikport (31), der mindestens das erste Befehlssignal (Cd. Exc.) entsprechend mindestens dem zweiten Steuersignal (Auth. Exc.) und mindestens einem ersten Lenksignal (Pil. Exc.) unter den Lenksignalen (Pil. Ond., Pil. Exc.) generiert.

12. Vorrichtung zur sicheren Steuerung einer an eine Wärmekraftmaschine (2) eines Fahrzeugs gekoppelten Generator-Starter-Anordnung (1, 27) nach dem vorhergehenden Anspruch 11, **dadurch gekennzeichnet, dass** der zweite Mikroprozessor (24) Status/Fehler-Signale (Etats/Défauts) an den ersten Mikroprozessor (22) sendet.

13. Vorrichtung zur sicheren Steuerung einer an eine Wärmekraftmaschine (2) eines Fahrzeugs gekoppelten Generator-Starter-Anordnung (1, 27) nach einem der vorhergehenden Ansprüche 9 bis 12, **dadurch gekennzeichnet, dass** das erste Befehlssignal (Cd. Exc.) der Anregungsschaltung (10) Befehle erteilt.

14. Vorrichtung zur sicheren Steuerung einer an eine Wärmekraftmaschine (2) eines Fahrzeugs gekoppelten Generator-Starter-Anordnung (1, 27) nach einem der vorhergehenden Ansprüche 8 bis 13, **dadurch gekennzeichnet, dass** das erste Diagnosesignal (Diag1. Ond.) von dem Rotationsdetektionsmittel (15) geliefert wird.

15. Generator-Starter-Anordnung (1, 27), welche für eine Wärmekraftmaschine (2) eines Fahrzeugs bestimmt ist, wobei die Generator-Starter-Anordnung mit der Vorrichtung zur sicheren Steuerung nach einem der vorhergehenden Ansprüche 8 bis 14 ausgestattet ist.

16. Generator-Starter-Anordnung (27), welche für eine Wärmekraftmaschine (2) eines Fahrzeugs bestimmt ist, nach Anspruch 15, ferner umfassend eine rekuperative Bremsfunktion vom Mikrohybrid-Typ.

## Claims

1. Method for secure control of an alternator-starter system (1,27) coupled to an engine (2) of a vehicle, the said vehicle comprising at least one electronic control unit (17), vehicle sensors, a data communication bus (19) and an onboard electrical network (Vbat, Vbat+X), the said alternator-starter system (1,27) comprising at least one rotating electric machine (3) furnished with a rotation detection means (15), power circuits (14) comprising at least one inverter (12) and an excitation circuit (10) supplying the said rotating electric machine (3), and a command circuit (13) for the said power circuits (14), the said method consisting in:
- generating by means of the said electronic control unit (17) control signals (Dd. Exe., Dd. Inv., Auth. Exe., Auth. Inv) for the said alternator-starter system (1,27) on the basis of first information signals (Sens. Veh.) representative of an operating state of the said vehicle originating from the said vehicle sensors;
- generating by means of the said command circuit (13) command signals (Cd. Exe., Cd. Inv.) for the said power circuits (14) on the basis of diagnosis signals (Diag1. Inv., Diag2. Exe., Diag2. Inv.) representative of an operating state of the said alternator-starter system;
**characterized in that** the said method furthermore consists in:
- generating the said control signals (Dd. Exe., Dd. Inv., Auth. Exe., Auth. Inv) by means of the said electronic control unit (17) on the basis moreover of at least one first diagnosis signal (Diag1. Inv.) from among the said diagnosis signals (Diag1. Inv., Diag1. Exe., Diag2. Inv., Diag2. Exe.);
- generating the said command signals (Cd. Inv., Cd. Exe.) by means of the said command circuit (13) on the basis moreover of second information signals (CAN) originating from the said data communication bus (19).

2. Method for secure control of an alternator-starter system (1,27) coupled to an engine (2) of a vehicle according to the preceding Claim 1, **characterized in that** at least one first command signal (Cd. Exe.) from among the said command signals (Cd. Inv., Cd. Exe.) constitutes at least one second diagnosis signal (Diag1. Exe.) from among the said diagnosis signals (Diag1. Inv., Diag1. Exe., Diag2. Inv., Diag2. Exe.).

3. Method for secure control of an alternator-starter system (1,27) coupled to an engine (2) of a vehicle according to the preceding Claim 2, **characterized in that** it furthermore consists in:
- generating at least one first control signal (Dd. Inv., Dd. Exe.) from among the said control signals (Dd. Exe., Dd. Inv., Auth. Exe., Auth. Inv.) by means of a first microprocessor (22) arranged in the said electronic control unit (17) and processing at least the said first diagnosis signal (Diag1. Inv.) and the said second diagnosis signal (Diag1. Exe.);
- generating at least one second control signal (Auth. Exe.) from among the said control signals (Dd. Exe., Dd. Inv., Auth. Exe., Auth. Inv) by means of a first hard-wired-logic decision circuit (23) arranged in the said control unit (17); and
- generating the said command signals (Cd. Inv., Cd. Exe.) by means exclusively of a second hard-wired-logic decision circuit (25,31) arranged in the said command circuit (13).

4. Method for secure control of an alternator-starter system (1,27) coupled to an engine (2) of a vehicle according to the preceding Claim 3, **characterized in that** it furthermore consists in:
- generating the said at least second control signal (Auth. Exe.) as a function of at least one first activation signal (Act. Exe.) from among activation and/or inhibition signals (Act. Exe., Inh. Inv.) generated by the said first microprocessor (22) and of a contact signal (+APC/ Vbat) representative of the powering-up of the said onboard electrical network;
- generating the said at least first command signal (Cd. Exe.) as a function of the said at least second control signal (Auth. Exe.) and of at least one first piloting signal (Pil. Exe.) from among piloting signals (Pil. Inv., Pil. Exe.) generated by a second microprocessor (24) arranged in the said command circuit (13).

5. Method for secure control of an alternator-starter system (1,27) coupled to an engine (2) of a vehicle according to the preceding Claim 4, **characterized in that** it furthermore consists in transmitting state/defect signals (States/Defects) by means of the said second microprocessor (24) to the said first microprocessor (22).

6. Method for secure control of an alternator-starter system (1,27) coupled to an engine (2) of a vehicle according to any one of the preceding Claims 2 to 5, **characterized in that** the said excitation circuit (10) is commanded by the said first command signal (Cd. Exe.).

7. Method for secure control of an alternator-starter system (1,27) coupled to an engine (2) of a vehicle according to any one of the preceding Claims 1 to 6, **characterized in that** the said first diagnosis signal (Diag1. Inv.) is provided by means of the said rotation detection means (15).

8. Device for secure control of an alternator-starter system (1,27) coupled to an engine (2) of a vehicle suitable for the implementation of the method according to any one of the preceding Claims 1 to 7, the said vehicle comprising at least one electronic control unit (17), vehicle sensors, a data communication bus (19) and an onboard electrical network (Vbat, Vbat+X), the said alternator-starter system (1,27) comprising at least one rotating electric machine (3) furnished with a rotation detection means (15), power circuits (14) comprising at least one inverter (12) and an excitation circuit (10) supplying the said rotating electric machine (3), and a command circuit (13) for the said power circuits (14), the said device being of the type of those where:
- the said electronic control unit (17) receives first information signals (Sens. Veh.) representative of an operating state of the said vehicle originating from the said vehicle sensors and generates control signals (Dd. Exe., Dd. Inv., Auth. Exe., Auth. Inv.) for the said alternator-starter system (1,27);
- the said command circuit (13) receives diagnosis signals (Diag2. Exe., Diag2. Inv.) representative of an operating state of the said alternator-starter system (1,27) and generates command signals (Cd. Exe., Cd. Inv.) for the said power circuits (14);
**characterized in that**:
- the said electronic control unit (17) moreover receives at least one first diagnosis signal (Diag1. Inv.) from among the said diagnosis signals (Diag1. Inv., Diag1. Exe., Diag2. Inv., Diag2. Exe.);
- the said command circuit (13) receives moreover second information signals (CAN) for the said data communication bus (19).

9. Device for secure control of an alternator-starter system (1,27) coupled to an engine (2) of a vehicle according to the preceding Claim 8, **characterized in that** at least one first command signal (Cd. Exe.) from among the said command signals (Cd. Inv., Cd. Exe.) constitutes at least one second diagnosis signal (Diag1. Exe.) from among the said diagnosis signals (Diag1. Inv., Diag1. Exe., Diag2. Inv., Diag2. Exe.).

10. Device for secure control of an alternator-starter system (1,27) coupled to an engine (2) of a vehicle according to any one of the preceding Claims 8 or 9, **characterized in that** it furthermore comprises:
- a first microprocessor (22) arranged in the said electronic control unit (17) processing at least the said first diagnosis signal (Diag1. Inv.) and the said second diagnosis signal (Diag1. Exe.), and generating at least one first control signal (Dd. Inv., Dd. Exe.) from among the said control signals (Dd. Exe, Dd. Inv., Auth. Exe., Auth. Inv.);
- a first hard-wired-logic decision circuit (23) arranged in the said control unit (17) and generating at least one second control signal (Auth. Exe.) from among the said control signals (Dd. Exe., Dd. Inv., Auth. Exe., Auth. Inv.);
- a second hard-wired-logic decision circuit (25,31) arranged in the said command circuit (13) and generating the said command signals (Cd. Inv., Cd. Exe.).

11. Device for secure control of an alternator-starter system (1,27) coupled to an engine (2) of a vehicle according to the preceding Claim 10, **characterized in that** it comprises moreover:
- a first logic gate (30) producing the said at least second control signal (Auth. Exe.) as a function of at least one first activation signal (Act. Exe.) from among activation and/or inhibition signals (Act. Exe., Inh. Inv.) generated by the said first microprocessor (22) and of a contact signal (+APC/ Vbat) representative of the powering-up of the said onboard electrical network (Vbat);
- a second microprocessor (24) arranged in the said command circuit (13) and generating piloting signals (Pil. Inv., Pil. Exe.);
- a second logic gate (31) generating the said at least first command signal (Cd. Exe.) as a function of the said at least second control signal (Auth. Exc.) and of at least one first piloting signal (Pil. Exe.) from among the said piloting signals (Pil. Inv., Pil. Exe.).

12. Device for secure control of an alternator-starter system (1,27) coupled to an engine (2) of a vehicle according to the preceding Claim 11, **characterized in** this the said second microprocessor (24) transmits state/defect signals (States/Defects) to the said first microprocessor (22).

13. Device for secure control of an alternator-starter system (1,27) coupled to an engine (2) of a vehicle according to any one of the preceding Claims 9 to 12, **characterized in that** the said first command signal (Cd. Exe.) commands the said excitation circuit (10).

14. Device for secure control of an alternator-starter system (1,27) coupled to an engine (2) of a vehicle according to any one of the preceding Claims 8 to 13, **characterized in that** the said first diagnosis signal (Diag1. Inv.) is provided by the said rotation detection means (15).

15. Alternator-starter system (1, 27) intended for an engine (2) of a vehicle, the said alternator-starter system being equipped with the said secure control device according to any one of the preceding Claims 8 to 14.

16. Alternator-starter system (27) intended for an engine (2) of a vehicle according to Claim 15 moreover comprising a regenerative braking function of micro-hybrid type.
